# EUROPÄISCHE PATENTANMELDUNG

(11) **EP 0 584 380 A1**
(43) Veröffentlichungstag der Anmeldung: **02.03.1994**
(21) Anmeldenummer: 92114186.7
(22) Anmeldetag: 20.08.1992
(51) Int. Cl.: B01D 17/032, B01D 21/24, B01D 19/00

(54) **Abscheider für mit direkt abscheidbaren Schwimmstoffen verschmutzte Abwässer**

(71) Anmelder: PASSAVANT-WERKE AG, D-65322 Aarbergen 7 (DE)
(72) Erfinder: Bachon, Ulrich, Dipl.-Ing., W-6252 Diez (DE)
(74) Vertreter: Glawe, Delfs, Moll & Partner

(57) **Zusammenfassung**

Um den Zutritt von Luft in ohne Freispiegel betriebene Abscheider für Schwimmstoffe organischen Ursprungs zu vermeiden und eventuell doch eingetragene Luft sofort wieder abzuleiten, weist der erfindungsgemäße Abscheider (1) an der oberen, räumlich verengten Abzugsöffnung (5) für die Schwimmstoffe eine selbsttätig Be- und Entlüftungseinrichtung (14) auf, von der die Abzugsleitung seitlich abgeht. Für den vollständigen Austrag von vor dem Absperrorgan gesammelter Luft wird das Absperrorgan schräg gestellt. Die ausgetragenen Schwimmstoffe drücken die Luft vollständig in die Entlüftungsleitung.

## Beschreibung

Die Erfindung betrifft einen Abscheider für mit direkt abscheidbaren Schwimmstoffen verschmutzte Abwässer in einem ohne inneren Freispiegel betriebenen, im wesentlichen horizontal durchströmten Beruhigungsbecken nach dem Oberbegriff von Patentanspruch 1.

Aus der DE-OS 38 20 142 ist es bekannt, solche Abscheider so auszubilden, daß die aufrahmenden Schwimmstoffe räumlich konzentriert zu einer obenliegenden absperrbaren Austragsöffnung geführt werden. Zum Austrag der Schwimmstoffe wird das Sperrorgan geöffnet und das durch die Abzugsleitung ausgetragene Schwimmstoffvolumen aufgefangen.

Mit dem Zulauf kann ebenfalls Luft in den Abscheider eingetragen werden. Die Luft sammelt sich an der höchsten Stelle vor dem in der Austragsöffnung angeordneten Absperrorgan.

Ein Problem bei einem solchen Abscheider ist die Luft, die sich nach dem Entsorgen der Schwimmstoffe im Abscheider befindet. Diese Luft stört den nächsten Abzug der Schwimmstoffe und bewirkt außerdem, daß der Luftsauerstoff die Schwimmstoffe oxidiert und damit nicht wieder verwertbar macht. Die Bedienungsperson ist überfordert, nach der Entsorgung und Wiederauffüllung das Absperrorgan so lange geöffnet zu halten, bis die Luft entwichen ist. Es besteht die Gefahr, daß dabei Abwasser austritt oder Restluft im Abscheider verbleibt. Die mit dem zulaufenden Abwasser eingetragene Luft wird erst beim nächsten Entsorgen der Schwimmstoffe abgelassen.

Die Aufgabe, den Abscheider zu jeder Zeit absolut luftfrei zu betreiben, wird dadurch gelöst, daß die Austragsleitung über dem Absperrorgan seitlich herausgeführt ist und daß an der höchsten Stelle der Abzugsleitung eine selbsttätige Be- und Entlüftungseinrichtung liegt, die gegen Luft öffnet und gegen Flüssigkeit schließt. Diese selbsttätige Einrichtung enthebt die Bedienungsperson jeglicher Beobachtung und Bedienung. Der Abscheider ist in jedem Betriebszustand luftfrei, d.h. der Schwimmstoffspiegel steht unmittelbar an der Entlüftungseinrichtung an. Mit dem Zulauf eingetragene Luft wird automatisch abgelassen. Da insbesondere die Reinwasser-Ablaufleitung wegen der Gefahr des Ausheberns ebenfalls belüftet sein muß, wird in Ausgestaltung der Erfindung vorgeschlagen, die Be- und Entlüftungseinrichtung des Schwimmstoffaustrags mit dieser Entlüftung zu verbinden. Für den Abzug der vom Zulauf ggf. mitgeführten Luftblasen ist es zweckmäßig, auch am Zulauf einen an die gemeinsame Entlüftung angeschlossenen Entlüftungsstutzen vorzusehen.

Sofern die abgetrennten Schwimmstoffe zum Erstarren neigen, kann es vorkommen, daß die selbsttätige Entlüftungseinrichtung versagt.

Als Abhilfe wird erfindungsgemäß vorgeschlagen, das Absperrorgan schräg in der Austragsöffnung anzuordnen, die Ableitungsleitung dahinter zur Seite geneigt zu verlegen und an der höchsten Stelle der Abzugsleitung eine Entlüftungsleitung abzuzweigen. Dann kann die Abzugsleitung mit Vollfüllung betrieben werden, so daß keine Luft in den Sammelcontainer gelangen kann. Die Luft wird in die Entlüftungsleitung entlassen.

Die Abbildungen zeigen größtenteils schematisch zwei Ausführungsbeispiele der Erfindung.

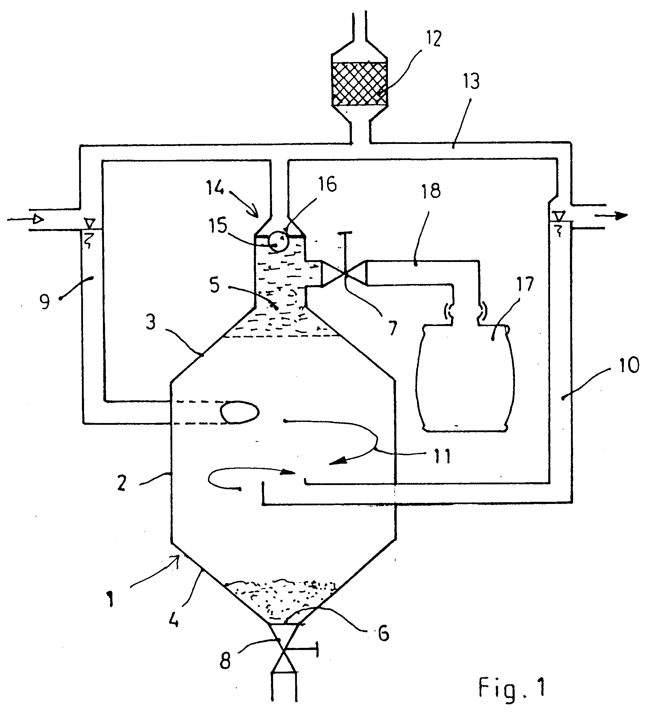

Der Beruhigungsbehälter 1 nach Fig.1 enthält einen stehend zylindrischen Mittelteil 2 und je einen konischen Deckel 3 und Boden 4. Jeweils an den Spitzen sind Abzugsöffnungen 5, 6 vorgesehen, die durch je einen Schieber 7, 8 verschließbar sind. Die überhöhte Zulaufleitung 9 mündet tangential in den Mittelteil, während die Auslaufleitung 10 für das gereinigte Abwasser vom Zentrum ausgeht. Im Betrieb stellt sich daher eine durch Pfeile 11 angedeutete Umlaufströmung ein. Beide Leitungen sind oben durch eine mit einem Aktivkohlefilter 12 als Geruchssperre ausgerüstete Entlüftungsleitung 13 verbunden.

An der höchsten Stelle der Schwimmstoffaustragsleitung 5 liegt eine selbsttätige Be- und Entlüftungseinrichtung 14, die ebenfalls mit der gemeinsamen Entlüftungsleitung 13 verbunden ist. Die Be- und Entlüftungseinrichtung enthält eine Schwimmkugel 15, die von aufsteigender Flüssigkeit gegen den Ventilsitz 16 gehoben wird. Sie ist so tariert, daß sie bei Vorhandensein von Luft so lange öffnet, bis die Luft ganz abgelassen ist. Auf diese Weise stehen die Schwimmstoffe immer luftfrei an dem Absperrventil 7 an, und auch nach einem Abzug der Schwimmstoffe, bei dem Luft aus der Belüftungsleitung 13 nachströmt, wird die Luft vollständig verdrängt. Die Schwimmstoffe werden vorzugsweise in einen luftdicht angeschlossenen Kleincontainer 17 abgelassen, der bei Vollfüllung abgekuppelt und durch einen leeren ersetzt wird.

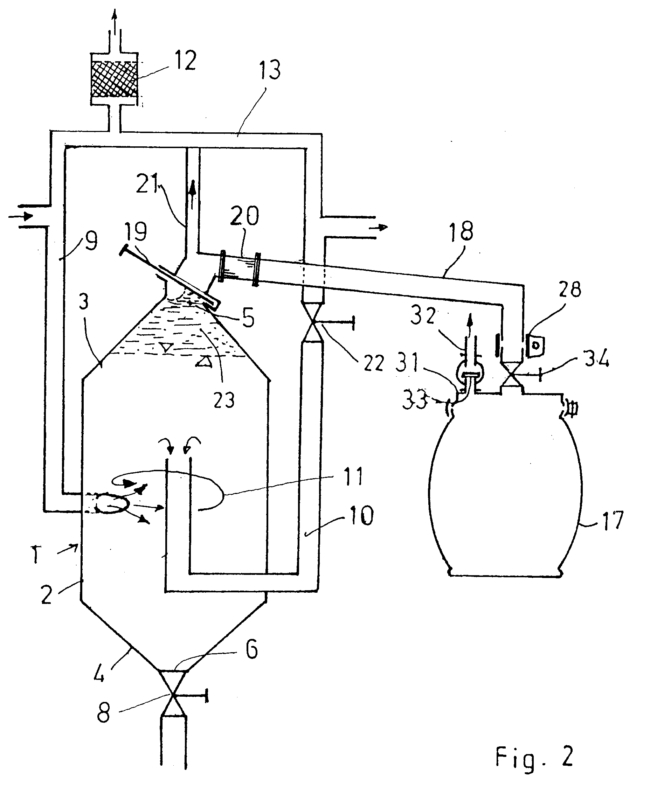

Die Abscheideranlage nach Fig. 2 enthält dieselben Bauteile wie die Anlage nach Fig. 1. Die Schwimmstoffe 23 sammeln sich unter Verdrängung von Reinwasser an der Austragsöffnung 5 vor dem schräg aufgesetzten Schieber 19. Von dort führt die mit einem Sichtfenster 20 ausgerüstete Abzugsleitung 19 fort, von der an ihrer höchsten Stelle eine Entlüftungsleitung 21 abzweigt. Die Abzugsleitung 18 endet an einem Adapter 31 zum luftdichten Anklemmen eines Sammelbehälters 17. Der Adapter 31 ist lösbar (Schelle 28) angekuppelt und kann gegen einen andern mit anderen Anschlußmaßen ausgewechselt werden. Der als genormte Tonne ausgebildete Sammelbehälter 17 wird nach Abnehmen des Deckels mit demselben Deckelspanner am Adapter befestigt. Zum Entweichen der Luft aus der sich füllenden Tonne 17 besitzt der Adapter 31 einen Entlüftungsstutzen 32 mit einem Schnüffelventil 33, das die Vollfüllung selbsttätig schließt. Der Adapter enthält am Anschlußstutzen ein Ventil 34, das sich vorzugsweise beim Abkuppeln des Behälters automatisch schließt.

Zum Abziehen der Schwimmstoffe wird das in der Reinwasser-Ablaufleitung 10 angeordnete Ventil 22 geschlossen und der Schieber 19 im Schwimmstoffablauf 5 geöffnet. Durch Zufuhr von Zusatzwasser in den Abscheider wird die Schwimmstoffschicht 23 in den Sammelbehälter 17 gedrückt. Am Sichtfenster 20 kann man beobachten, wann der Abzug beendet ist. Die vor dem Schieber 19 gegebenenfalls vorhandene Luftblase wird von den Schwimmstoffen mit ausgetragen und durch die Entlüftung 13 abgeführt.

## Patentansprüche

1. Abscheider für mit direkt abscheidbaren Schwimmstoffen verschmutzte Abwässer in einem ohne inneren Freispiegel betriebenen, im wesentlichen horizontal durchströmten Beruhigungsbehälter, der eine nach oben räumlich verengte, absperrbaren Austragsöffnung mit Austragsleitung für die aufgerahmten Schwimmstoffe aufweist, **dadurch gekennzeichnet**, daß an der höchsten Stelle der seitlich herausgeführten Austragsleitung (18) eine selbsttätige Be- und Entlüftungseinrichtung (14 ... 16) liegt, die gegen Luft öffnet und gegen Flüssigkeit schließt.

2. Abscheider nach Anspruch 1, **dadurch gekennzeichnet**, daß die Entlüftungseinrichtung (14... 16) an die Entlüftung (13) der Zu- und Ablaufleitungen (9, 10) angeschlossen ist.

3. Abscheider für mit direkt abscheidbaren Schwimmstoffen organischen Ursprungs verschmutzte Abwässer, mit einem ohne Freispiegel betriebenen im wesentlichen horizontal durchströmten Abscheiderbehälter, der eine nach oben räumlich verengte, absperrbare Austragsöffnung mit Austragsleitung für die Schwimmstoffe aufweist, **dadurch gekennzeichnet**, daß das Absperrorgan (19) schräg in der Austrittsöffnung liegt, daß die Austragsleitung (18) dahinter zur Seite geneigt verlegt ist, und daß an der höchsten Stelle der Austragsleitung eine Entlüftungsleitung (21) abgezweigt ist.

4. Abscheider nach Anspruch 3, **dadurch gekennzeichnet**, daß das Absperrorgan als schräg angesetzter Kugelhahn ausgebildet ist.

5. Abscheider nach Anspruch 1 oder 2, **dadurch gekennzeichnet**, daß die selbsttätige Entlüftungseinrichtung (14...16) einen auf die Dichtedifferenz zwischen Luft und Schwimmstoff eingestellten Schwimmkörper (15) aufweist, der das Öffnen und Schließen bei Flüssigkeitszutritt und das Ablassen der Luft bewirkt.

6. Abscheider nach Anspruch 5, **dadurch gekennzeichnet**, daß der Schwimmkörper als eine mit einem oberen Ventilsitz (16) zusammenwirkende Schwimmkugel (15) ausgebildet ist.
